# EUROPÄISCHE PATENTANMELDUNG

(11) **EP 3 157 275 A1**
(43) Veröffentlichungstag der Anmeldung: **19.04.2017**
(21) Anmeldenummer: 16450028.2
(22) Anmeldetag: 17.10.2016
(51) Int. Cl.: H04W 4/02, H04M 3/42, H04L 29/08, H04L 12/58, H04W 4/10, H04M 3/487, H04W 84/08, G06Q 30/02, H04L 12/18, H04W 4/22, H04H 60/51

(54) **VERFAHREN UND SYSTEM ZUM ÜBERMITTELN UND WIEDERGEBEN VON SPRACHDURCHSAGEN**

(30) Priorität: 15.10.2015 AT 6702015
(71) Anmelder: Control Center Apps GmbH, 1040 Wien (AT)
(72) Erfinder: Skach, Kuno, A-1030 Wien (AT); Knittel, Christoph, A-1190 Wien (AT)
(74) Vertreter: Keschmann, Marc

(57) **Zusammenfassung**

Bei einem Verfahren zum Übermitteln und Wiedergeben von Sprachdurchsagen sind folgende Schritte vorgesehen:
- das Aufnehmen einer Sprachdurchsage und Speichern derselben ein einem Server-Rechner (1),
- das Zuweisen von Attributen, wie z.B. ersten und ggf. zweiten Ortsattributen und/oder benutzerspezifischen Attributen, zu der aufgenommenen Sprachdurchsage,
- das Erfassen von gerätespezifischen und/oder benutzerspezifischen Daten in mobilen Telekommunikationsendgeräten (2) von Nutzern,
- das Übermitteln der gerätespezifischen und/oder benutzerspezifischen Daten gemeinsam mit einer Geräteidentifikation des jeweiligen Telekommunikationsendgeräts (2) an den Server-Rechner (1),
- das Abgleichen der der Sprachdurchsage zugewiesenen Attribute mit den von den Telekommunikationsendgeräten (2)) erhaltenen gerätespezifischen und/oder benutzerspezifischen Daten,
- das Selektieren wenigstens einer Geräteidentifikation anhand des Abgleichs der Attribute mit den erhaltenen gerätespezifischen und/oder benutzerspezifischen Daten,
- das Übermitteln der Sprachdurchsage und/oder eines Hinweises auf die Sprachdurchsage an das oder die der wenigstens einen selektierten Geräteidentifikation entsprechende (n) Telekommunikationsendgerät(e) (2).

## Beschreibung

Sprachdurchsagen werden in der Regel über elektroakustische Anlagen oder Rundfunkeinrichtungen wiedergeben und dienen der Benachrichtigung oder Alarmierung von Personen. Sprachdurchsagen sind dadurch gekennzeichnet, dass seitens der Personen, an welche sich die jeweilige Durchsage richtet, keine Benutzeraktion erforderlich ist. Die Durchsage wird vielmehr undifferenziert an alle Personen kommuniziert, die sich in Hörweite der jeweiligen elektroakustischen Anlage befinden.

Anwendungsgebiete von Sprachdurchsagen sind beispielsweise der Individualverkehr (insbesondere Autofahrer, Motorradfahrer, Radfahrer), der öffentliche Verkehr (insbesondere Bahn, Bus, U-Bahn, Straßenbahn, Flug, Bergbahnen), und zwar sowohl in Stationen als auch in den Fahrzeugen selbst, Sicherheitsdurchsagen (insbesondere im Rahmen von Veranstaltungen) sowie Durchsagen im Bereich der öffentlichen Sicherheit, betriebliche Durchsagen und Durchsagen zum Zwecke des sog. Crowd Tasking.

Im Bereich des Individualverkehrs erfolgen gesprochene Verkehrsdurchsagen derzeit über das Radio. Dies ist mit den folgenden Nachteilen verbunden:
- Der Anbieter von gesprochener Verkehrsinformation ist auf die Kooperation mit einem Radiobetreiber als Übertragungsmedium angewiesen. Die in vielen Ländern sehr geringe Anzahl landesweiter Radiobetreiber kann zu einer hohen Abhängigkeit von der Gunst der Radiobetreiber führen. Auch im Fall einer Kooperation unterliegt der Anbieter von Verkehrsinformation bezüglich des Zeitpunkts sowie der Dauer von Durchsagen den Vorgaben des Radiobetreibers.
- Der Fahrer hat keinen Einfluss auf den Zeitpunkt der Durchstellung von Verkehrsdurchsagen. Die Durchsage kann daher zu aus Sicht des Fahrers ungünstigen Zeitpunkten erfolgen, wie z.B. in kritischen Verkehrssituationen oder während wichtiger Gespräche oder Telefonate.
- Es besteht keine Möglichkeit Verkehrsdurchsagen für den Fahrer sinnvoll zu filtern, wie z.B. danach, ob Interesse am hochrangigen oder niederrangigen Verkehr besteht, oder nach der Relevanz für das jeweilige Verkehrsmittel (Autofahrer, Fahrradfahrer, etc.)
- Die maximale Dauer von über Radio (sinnvoll) möglichen Verkehrsdurchsagen gemeinsam mit der mit diesem Medium verbundenen Großräumigkeit zwingt den Anbieter der Verkehrsinformation sich auf wenige Ereignisse zu beschränken, sodass die Gefahr besteht, das Interesse einer Vielzahl von Fahrern nicht befriedigen zu können.
- Weil keine Möglichkeit besteht zu erkennen, ob jemand eine Durchsage erhalten hat, müssen identische Durchsagen oft mehrfach wiederholt werden.
- Es besteht keine Möglichkeit zur Reichweitenmessung oder zur Ermittlung von Feedback zu einer Durchsage, (z.B. ob die Durchsage nützlich war, ob der Vorschlag für eine Ausweichroute befolgt wurde).

Im Bereich des öffentlichen Verkehrs sowie bei Sicherheitsdurchsagen erfolgen Durchsagen meist über Lautsprechersysteme. Die Nachteile dieser Technik sind wie folgt:
- Die Durchsage über Lautsprechersysteme erfordert teure-Infrastruktur, die speziell bei weniger frequentierten Vierkehrsmitteln, Haltestellen oder Veranstaltungsgeländen unverhältnismäßig hoch sind, sodass diese oft nicht versorgt werden.
- Durchsagen über Lautsprechersysteme sind aufgrund der akustischen Charakteristik (Lautsprecherqualität, Hall, störende Nebengeräusche) oft akustisch schwer verständlich.
- Durchsagen können von Personen leicht überhört bzw. erst zu spät wahrgenommen werden, entweder aufgrund der Rahmenbedingungen (z.B. lautes Umfeld) oder aufgrund von Ablenkung (Gespräch, Konzentration auf Smartphone oder Laptop).
- Durchsagen über Lautsprecher können nicht exakt auf ein konkretes Publikum (z.B. spezieller Flug oder Zug, Menschen mit eingeschränkter Mobilität, bestimmte Sprache) oder einen bestimmten Bereich (z.B. bestimmter Bahnsteig, bestimmter Bereich des Veranstaltungsgeländes) eingeschränkt werden. Eine Vielzahl der Durchsagen führt dazu, dass diese von den Personen nicht mehr wahrgenommen werden.
- Weil keine Möglichkeit besteht zu erkennen, ob jemand eine Durchsage erhalten hat, müssen identische Durchsagen oft mehrfach wiederholt werden.

Im Bereich der öffentlicher Sicherheit und betrieblicher Kommunikation (z.B. im Bahnbereich) erfolgen Durchsagen in Form von Gruppenrufen via spezieller (Funk-) Kommunikationssysteme wie z.B. Analogfunk, GSM-R oder Tetra. Die Nachteile dieser Technik sind wie folgt:
- Solche Gruppenrufe erfordern typischerweise teure Infrastruktur.
- Diese Infrastruktur steht üblicherweise nur bestimmten Behörden oder Betrieben (z.B. Bahnen) innerhalb bestimmter geographischer Grenzen zur Verfügung. Kommunikationsteilnehmer benötigen üblicherweise teure Endgeräte, die auch aufwändig registriert werden müssen. Das verhindert im Speziellen die Einbeziehung von Betriebsfremden bzw. von Privatpersonen und damit den Einsatz in neu entstehenden Nutzungsszenarien wie etwa im Bereich Crowd Tasking. Auch eigenes Personal außerhalb der geographischen Grenzen kann mit Durchsagen nicht versorgt werden.
- Der Empfänger einer Durchsage hat keinen Einfluss auf den Zeitpunkt der Durchstellung der Durchsage. Dadurch kann es dazu kommen, dass der Empfänger die Durchsage überhört, nicht versteht oder gar falsch versteht. Weiters kann er bei wichtigen oder sogar Sicherheits-relevanten Tätigkeiten gestört werden.
- Bestehende Technik basiert auf einer synchronen Übertragung der Durchsage. Ist im Empfangsbereich keine Netzabdeckung gegeben, so wird die Nachricht an die betroffenen Empfänger nicht übermittelt.
- Es besteht oft keine Möglichkeit zu erkennen, ob jemand eine Durchsage erhalten hat.
- Es besteht keine Möglichkeit zur Reichweitenmessung einer Durchsage.

Der vorliegenden Erfindung liegt daher die Aufgabe zugrunde, ein. Verfahren und ein System zum Übermitteln und Wiedergeben von Sprachdurchsagen zu schaffen, welche den charakteristischen Eigenschaften von herkömmlichen Durchsagesystemen Rechnung trägt, nämlich an bestimmten Orten, Regionen, Fahrzeugen oder Gebäudebereichen Durchsagen durchzuführen, für deren Empfang beim Empfänger kein weiteres Zutun erforderlich ist, die Durchsage also nicht erwartet oder gar abgerufen werden muss. Dabei sollen jedoch die oben beschriebenen Einschränkungen des Stands der Technik überwunden werden.

Zur Lösung dieser Aufgabe besteht die Erfindung bei einem Verfahren zum Übermitteln und Wiedergeben von Sprachdurchsagen im Wesentlichen darin, dass folgende Schritte vorgesehen sind:
- das Aufnehmen einer Sprachdurchsage und Speichern derselben in einem Server-Rechner,
- das Zuweisen von Attributen, wie z.B. ersten und ggf. zweiten Ortsattributen und/oder benutzerspezifischen Attributen, zu der aufgenommenen Sprachdurchsage,
- das Erfassen von gerätespezifischen und/oder benutzerspezifischen Daten in mobilen Telekommunikationsendgeräten von Nutzern,
- das Übermitteln der gerätespezifischen und/oder benutzerspezifischen Daten gemeinsam mit einer Geräteidentifikation des jeweiligen Telekommunikationsendgeräts an den Server-Rechner,
- das Abgleichen der der Sprachdurchsage zugewiesenen Attribute mit den von den Telekommunikationsendgeräten erhaltenen gerätespezifischen und/oder benutzerspezifischen Daten,
- das Selektieren wenigstens einer Geräteidentifikation anhand des Abgleichs der Attribute mit den erhaltenen gerätespezifischen und/oder benutzerspezifischen Daten,
- das Übermitteln der Sprachdurchsage und/oder eines Hinweises auf die Sprachdurchsage an das oder die der wenigstens einen selektierten Geräteidentifikation entsprechende(n) Telekommunikationsendgerät(e).

Der Erfindung liegt somit die Idee zugrunde, Durchsagen direkt an mobile Telekommunikationsendgeräte der Benutzer über deren mobile Internetanbindung zu übertragen und dort abzuspielen statt kostspielige Infrastruktur, wie z.B. Lautsprechersysteme, Radio oder professionelle Funksysteme zu nutzen. Unter einem mobilen Telekommunikationsendgerät ist im Rahmen der Erfindung insbesondere ein Mobilfunktelefon, wie z.B. ein SmartPhone, ein Tablet, ein mobiler Personal Computer, ein PDA (Personal Digital Assistant) sowie Wearables oder dgl. zu verstehen, mit welchem eine mobile Datenverbindung mit einem entfernten Server-Rechner hergestellt werden kann. Die Datenverbindung erfolgt hierbei beispielsweise über ein Mobilfunknetz, wie z.B. GSM-, UMTS- oder LTE-Netz. Auf Grund der weiten Verbreitung von Mobiltelefonen kann das erfindungsgemäße Verfahren ohne großen Aufwand mit einer Vielzahl von Endgeräten genutzt werden.

Die Erfindung ermöglicht eine gezielte Adressierung derjenigen Personengruppe, an welche die jeweilige Sprachdurchsage gerichtet ist, sodass die Nutzer nur diejenigen Sprachdurchsagen erhalten, die für sie relevant sind. Die Auswahl der Personengruppe erfolgt erfindungsgemäß durch Versehen der aufgenommenen und im Server-Rechner gespeicherten Sprachdurchsagen mit geeigneten Attributen, wie z.B. Ortsattributen und/oder benutzerspezifischen Attributen. Durch das Zuweisen von Ortsattributen zu den Sprachdurchsagen wird die Möglichkeit geschaffen, die jeweilige Sprachdurchsage in ihrem örtlichen Gültigkeitsbereich so einzuschränken, dass lediglich diejenigen Nutzer die Sprachdurchsage oder einen Hinweis darauf erhalten, die sich in dem betreffenden örtlichen Bereich aufhalten. Zur Verortung der Nutzer können herkömmliche Technologien, wie z.B. GPS-Positionierung, Geo-Fencing und Technologien zur Indoor-Verortung (wie z.B. Bluetooth LE Beacons) genutzt werden, die in der Regel von herkömmlichen Endgeräten, wie z.B. Smartphones unterstützt werden. Der Gültigkeitsbereich von Durchsagen kann auf diese Weise z.B. auf bestimmte Bahnsteigbereiche, aber auch auf bewegte Objekte, wie konkrete Züge oder gar einzelne Waggons beschränkt werden.

Durch das Zuweisen von benutzerspezifischen Attributen zu den im Server-Rechner gespeicherten Sprachdurchsagen wird die Möglichkeit geschaffen, die jeweilige Sprachdurchsage auf eine bestimmte Personengruppe auf Grund von Nutzereigenschaften oder Nutzereinstellungen einzuschränken, wie z.B. Geschlecht, körperliche Behinderung, Zugehörigkeit zu einer Berufsgruppe (z.B. Polizei), Abonnieren eines Typs von Sprachdurchsagen (z.B. Auswähl eines Abonnements für Verkehrsdurchsagen, Umweltgefahrenhinweisen, Wetterwarnungen und dgl.) oder situationsrelevante Informationen (z.B. Benutzer fährt gerade Auto, Bahn oder Fahrrad).

Die Erfindung ermöglicht somit das gezielte Adressieren von Nutzern ohne die anderen Nutzer zu stören und ohne dass die Gesamtzahl der beteiligten Nutzer beschränkt wäre.

Erfindungsgemäß erfolgt die Selektion der den einzelnen Endgeräten bzw. Nutzern zur Verfügung zu stellenden Sprachdurchsagen zumindest teilweise im Server-Rechner. Andernfalls wäre es erforderlich, jede Sprachdurchsage an alle beteiligten Endgeräte zu übersenden und die Auswahl der den jeweiligen Attributen entsprechenden Endgeräte im Endgerät selbst vorzunehmen, was jedoch zu einer unnötig hohen zu übertragenden Datenmenge sowie einem hohen Batterieverbrauch der Endgeräte führen würde. Es wird daher so vorgegangen, dass gerätespezifische und/oder benutzerspezifische Daten in den mobilen Telekommunikationsendgeräten erfasst werden, z.B. durch Abfrage der örtlichen Position oder von Nutzereinstellungen, und diese Daten an den Server-Rechner übermittelt werden. Im Server-Rechner erfolgt ein Abgleich der erhaltenen gerätespezifische und/oder benutzerspezifische Daten mit den den dort gespeicherten Sprachdurchsagen zugewiesenen Attributen, wobei auf Grund des Abgleichs die interessierende Sprachdurchsage selektiert und den betreffenden Endgeräten zur Verfügung gestellt wird. Im einfachsten Fall erfolgt der Abgleich dadurch, dass die vom Endgerät erhaltenen gerätespezifischen und/oder benutzerspezifischen Daten mit den gespeicherten Attributen verglichen werden und eine Selektion vorgenommen wird, wenn die verglichenen Werte übereinstimmen, d.h. wenn z.B. die örtliche Position des Endgeräts innerhalb des durch die der Sprachdurchsage zugewiesenen Ortsattribute definierten örtlichen Bereichs liegt. Bevorzugt können aber auch logische Operationen angewendet werden, bei der mehrere Attribute verknüpft werden, z.B. mit UND oder ODER-Verknüpfungen. Eine Sprachdurchsage wird beispielsweise dann für die Zurverfügungstellung an ein Endgerät selektiert, wenn dieses Endgerät innerhalb des definierten örtlichen Gültigkeitsbereichs liegt und es sich um einen Nutzer handelt, der auf seinem Endgerät Durchsagen an Bahnsteigen abonniert bzw. aktiviert hat.

Die in Anspruch 1 angegebene Reihenfolge der Verfahrensschritte ist nicht als chronologische Reihenfolge zu betrachten. Im Rahmen der Erfindung ist es möglich die Schritte in einer abweichenden Reihenfolge durchzuführen, wobei es sich insbesondere bei dem dritten und dem vierten Schritt betreffend das Erfassen von gerätespezifischen und/oder benutzerspezifischen Daten in mobilen Telekommunikationsendgeräten und das Übermitteln dieser Daten an den Server-Rechner um Vorgänge handelt, die an einer anderen Stelle des Verfahrens, z.B. am Anfang, durchgeführt werden können. Insbesondere können diese Schritte auch periodisch oder anlässlich einer örtlichen Positionsänderung des Nutzers vorgenommen werden, um die entsprechenden im Server-Rechner gespeicherten Daten zu aktualisieren.

Im Rahmen der Erfindung existieren verschiedene Möglichkeiten die Sprachdurchsage dem Benutzer zur Kenntnis zu bringen. Die im Server-Rechner selektierte Sprachdurchsage kann direkt an das jeweilige Endgerät übertragen und dort ohne Benutzereinwirkung wiedergegeben werden. Alternativ kann die im Server-Rechner selektierte Sprachdurchsage an das jeweilige Endgerät übertragen werden, jedoch nicht unmittelbar wiedergegeben, sondern lediglich ein Hinweis auf die zur Verfügung stehende Sprachdurchsage angezeigt werden. Die Wiedergabe erfolgt in diesem Fall erst dann, wenn der Benutzer dies durch eine entsprechende Eingabe anfordert. Alternativ wird lediglich ein Hinweis auf die im Server-Rechner bereitgestellte Sprachdurchsage generiert und an das Endgerät übermittelt. Die tatsächliche Übertragung der Sprachdurchsage an das Endgerät erfolgt in diesem Fall erst dann, wenn der Benutzer dies durch eine entsprechende Benutzereingabe angefordert hat.

Eine bevorzugte Verfahrensweise sieht in diesem Zusammenhang vor, dass der Hinweis auf einem Display des Telekommunikationsendgeräts angezeigt und die Sprachdurchsage nach einer Benutzereingabe am Telekommunikationsendgerät wiedergegeben wird. Der Zeitpunkt des Abspielens kann somit individuell gewählt werden und der Benutzer kann sich besser auf den Inhalt der Durchsage konzentrieren.

Eine andere bevorzugte Verfahrensweise sieht vor, dass die an das Telekommunikationsendgerät übermittelte Sprachdurchsage automatisch, d.h. ohne dass es einer Aktivität des Benutzers bedarf, wiedergegeben wird. Dies ist besonders für dringende Durchsagen vorteilhaft.

Die Auswahl, ob das Endgerät eine Sprachdurchsage sofort und automatisch wiedergibt oder ob es zunächst lediglich einen Hinweis auf die Sprachdurchsage anzeigt, kann von den der Sprachnachricht zugewiesenen Attributen abhängig gemacht werden, wie z.B. der Dringlichkeit der Durchsage oder dem Grad der Verständlichkeit oder der zeitlichen Länge der Durchsage.

Der Durchsagemechanismus ermöglicht es, dass nach einmaliger Installation einer Softwareanwendung bzw. App auf dem Endgerät kein weiteres Zutun wie ein aktives Starten der Anwendung z.B. nach einem Neustart des Endgeräts oder ein aktives Suchen nach Durchsagen erforderlich ist, sodass das Nutzungsmuster aus der Benutzerperspektive anlog zu herkömmlichen Lautsprecher- oder Radiodurchsagen ist. Die Erfindung ist daher für dieselben Anwendungsfälle einsetzbar wie beispielsweise Bahnsteigdurchsagen, Durchsagen in Zügen oder Verkehrsdurchsagen.

Wie bereits erwähnt erlaubt es die Erfindung serverseitig eine vom Standort der Nutzer abhängige Selektion der zur Verfügung zu stellenden Sprachdurchsagen vorzunehmen. Das erfindungsgemäße Verfahren ist zu diesem Zweck bevorzugt derart ausgebildet, dass die gerätespezifischen Daten erste Ortsdaten, insbesondere GPS-Daten, betreffend die örtliche Position des Telekommunikationsendgeräts umfassen und dass die ersten Ortsdaten im Server-Rechner mit den der Sprachdurchsage zugewiesenen ersten Ortsattributen abgeglichen werden. Die im Endgerät z.B. mit Hilfe eines Verortungsmoduls ermittelten ersten Ortsdaten werden hierbei periodisch oder bei signifikanter Positionsveränderungen an den Server-Rechner übermittelt.

Die oben beschriebene serverseitige örtliche (Vor-)Selektion von Nutzern kann bevorzugt durch eine endgeräteseitige Feinselektion bzw. weitere Filterung ergänzt werden. Es wird zu diesem Zweck bevorzugt so vorgegangen, dass die Sprachdurchsage bzw. der Hinweis auf die Sprachdurchsage gemeinsam mit den der Sprachdurchsage zugewiesenen zweiten Ortsattributen an das oder die Telekommunikationsendgerät(e) übermittelt wird und dass im Telekommunikationsendgerät auf Grund der zweiten Ortsattribute zweite Ortsdaten betreffend die örtliche Position des Telekommunikationsendgeräts ermittelt werden und im Telekommunikationsendgerät mit den zweiten Ortsattributen abgeglichen werden und bei Übereinstimmung der zweiten Ortsattribute mit den zweiten Ortsdaten entweder der Hinweis auf die Sprachdurchsage auf einem Display des Telekommunikationsendgeräts angezeigt, die Sprachdurchsage an das Telekommunikationsendgerät übermittelt und/oder die Sprachdurchsage wiedergegeben wird oder die Anzeige des Hinweises auf die Sprachdurchsage auf einem Display des Telekommunikationsendgeräts, die Übermittlung der Sprachdurchsage an das Telekommunikationsendgerät und/oder die Wiedergabe der Sprachdurchsage unterdrückt wird.

Während die ersten Ortsattribute und die ersten Ortsdaten der örtliche Vorselektierung dienen, werden die zweiten Ortsattribute und die zweiten Ortsdaten zur Feinauswahl herangezogen, ob die Sprachdurchsage tatsächlich notifiziert oder wiedergegeben werden soll. Die ersten Ortsdaten können beispielsweise mit Hilfe von großräumigen Verortungsverfahren, wie z.B. GPS- oder GMS-Ortung, ermittelt werden, während die zweiten Ortsdaten durch kleinräumige Verortungsverfahren, insbesondere anhand von elektronischen Ortsmarkern, wie z.B. Beacons, ermittelt werden. Beacons erlauben eine äußerst engräumige Bestimmung der örtlichen Position auch in sich bewegenden Objekten, wie z.B. Fahrzeugen, sodass eine bestimmte Sprachdurchsage z.B. getriggert werden kann, wenn der Nutzer sich in einem bestimmten Waggon eines Zugs befindet oder diesen betritt (Geo-Fencing).

Wenn die örtliche Vorselektierung dahingehend erfolgen soll, dass diejenigen Telekommunikationsendgeräte vorselektiert werden sollen, die sich in der Nähe eines elektronischen Ortsmarkers befinden, ist es vorteilhaft, den betreffenden elektronischen Ortsmarker zu verorten, insbesondere dann, wenn es sich um einen Ortsmarker handelt, der ortsveränderlich ist, z.B. in einem Verkehrsmittel angeordnet ist. Zu diesem Zweck kann bevorzugt so vorgegangen werden, dass Telekommunikationsendgeräte, die den betreffenden elektronischen Ortsmarker in ihrer Nähe identifizieren, nach großräumigen Verortungsverfahren ermittelte Ortsdaten betreffend ihre aktuelle Position an den Server-Rechner übermitteln. Auf diese Weise kann die örtliche Position eines elektronischen Ortsmarkers ermittelt bzw. aktuell gehalten werden und im erfindungsgemäßen Verfahren als erste Ortsattribute herangezogen werden. Das Identifizieren von Ortsmarkern in der Nähe von Telekommunikationsendgeräten kann dabei bevorzugt anlässlich des Erhalts einer Sprachdurchsage oder eines Hinweises auf eine Sprachdurchsage erfolgen. Das oder die jeweils eine Sprachdurchsage oder einen Hinweis darauf erhaltende(n) Telekommunikationsendgeräte(n) wird bzw. werden bei dieser Gelegenheit veranlasst, die Umgebung nach beliebigen oder vorbestimmten Ortsmarkern abzuscannen und das Ergebnis des Scanvorgangs gemeinsam mit ihrer Position an den Server-Rechner zu übermitteln. Die dadurch im Server-Rechner gewonnene Information über die gegenwärtige Position des bzw. der Ortsmarker(s) kann in weiterer Folge für die Vorselektion anderer Telekommunikationsendgeräte, an welche dieselbe Sprachnachricht oder eine andere Sprachnachricht oder ein Hinweis darauf übermittelt werden soll, genutzt werden.

Eine bevorzugte Ausbildung sieht vor, dass das Übermitteln und Anzeigen des Hinweises auf die Sprachdurchsage mittels eines Notifizierungsdienstes erfolgt. Insbesondere erfolgt das Übermitteln des Hinweises auf die Sprachdurchsage mittels einer Push-Nachricht des Notifizierungsdienstes. Dadurch kann die Sprachdurchsage ohne Zutun des Benutzers auf das Endgerät geladen und dort wiedergegeben werden. Der Notifizierungsdienst ist bevorzugt eingerichtet, um den erhaltenen Hinweis auf die Sprachdurchsage an die Softwareanwendung weiterzuleiten, welche ggf. nach Anwendung der Filterkriterien ein Herunterladen der Sprachdurchsage vom Server-Rechner und die Wiedergabe derselben veranlasst.

Bevorzugt liegt die Sprachdurchsage als Audio-File vor.

Gemäß einer weiteren bevorzugten Weiterbildung des erfindungsgemäßen Verfahrens erfolgt die Aufnahme der Sprachdurchsage mit einem Endgerät eines Bündelfunksystems, das die Sprachnachricht vorzugsweise mittels einer Push-To-Talk Funktion nach dem Rufaufbau zum Server-Rechner an den Server-Rechner überträgt. Dadurch gelingt in einfacher Weise die Anbindung des Durchsagesystems an (professionelle) Funksysteme (wie z.B. Analogfunk, Tetra, GSM-R, etc.).

Ein weiterer Vorteil der Erfindung liegt in der Möglichkeit eines nutzerseitigen Feedbacks. Dadurch können Informationen über die Nutzbarkeit oder Qualität der Durchsagen an ein serverseitiges Statistikmodul gesendet werden. Dies kann einerseits eine manuelle Bewertung durch den Benutzer des Endgeräts sein, aber auch automatisch gewonnene Daten enthalten, wie beispielsweise, ob die Durchsage aufgrund der Filterkriterien ausgeschlossen wurde, den Zeitraum bis zur Annahme einer Durchsage oder in welchem Zustand sich das Endgerät bei Empfang der Durchsage befunden hat. Das serverseitige Statistikmodul kann auf Basis dieser Feedbackdaten, der Positionsdaten der Endgeräte sowie der Daten aus den im Server-Rechner gespeicherten Durchsagen Auswertungen erstellen.

Gemäß einem weiteren Aspekt betrifft die Erfindung ein System zum Übermitteln und Wiedergeben von Sprachdurchsagen umfassend einen Server-Rechner und eine Vielzahl von mobilen Telekommunikationsendgeräten, wobei der Server-Rechner einen Speicher mit darin gespeicherten Sprachdurchsagen und diesen zugewiesenen Attributen, wie z.B. ersten und ggf. zweiten Ortsattributen und/oder benutzerspezifischen Attributen, aufweist und die Telekommunikationsendgeräte eine Softwareapplikation aufweisen, die eingerichtet ist, um gerätespezifische und/oder benutzerspezifische Daten zu erfassen und wobei der Server-Rechner und die Telekommunikationsendgeräte mit Hilfe eines Telekommunikationsnetzwerkes in Telekommunikationsverbindung bringbar sind und die Softwareapplikation eingerichtet ist, um die gerätespezifischen und/oder benutzerspezifischen Daten gemeinsam mit einer Geräteidentifikation des jeweiligen Telekommunikationsendgeräts an den Server-Rechner zu übermitteln, wobei der Server-Rechner eine Serverapplikation aufweist, die eingerichtet ist, um die der Sprachdurchsage zugewiesenen Attribute mit den von den Telekommunikationsendgeräten erhaltenen gerätespezifischen und/oder benutzerspezifischen Daten abzugleichen und wenigstens eine Geräteidentifikation anhand des Abgleichs der Attribute mit den erhaltenen gerätespezifischen und/oder benutzerspezifischen Daten abzugleichen und die Sprachdurchsage und/oder einen Hinweises auf die Sprachdurchsage an das oder die der wenigstens einen selektierten Geräteidentifikation entsprechende(n) Telekommunikationsendgerät(e) zu übermitteln.

Bevorzugt ist vorgesehen, dass die Telekommunikationsendgeräte von Smartphones gebildet sind.

Gemäß einer bevorzugten Ausbildung ist vorgesehen, dass die Softwareapplikation eingerichtet ist, um den Hinweis zu signalisieren, z.B. optisch (z.B. Anzeige auf einem Display des Telekommunikationsendgeräts), akustisch oder taktil, und die Sprachdurchsage nach einer Benutzeraktion am Telekommunikationsendgerät akustisch wiederzugeben.

Gemäß einer bevorzugten Ausbildung ist vorgesehen, dass die Softwareapplikation eingerichtet ist, um die an das Telekommunikationsendgerät übermittelte Sprachdurchsage automatisch wiederzugeben.

Gemäß einer bevorzugten Ausbildung ist vorgesehen, dass die gerätespezifischen Daten erste Ortsdaten, insbesondere GPS-Daten, betreffend die örtliche Position des Telekommunikationsendgeräts umfassen und dass die ersten Ortsdaten im Server-Rechner mit den der Sprachdurchsage zugewiesenen ersten Ortsattributen abgeglichen werden.

Gemäß einer bevorzugten Ausbildung ist vorgesehen, dass die Serveranwendung eingerichtet ist, um die Sprachdurchsage bzw. den Hinweis auf die Sprachdurchsage gemeinsam mit den der Sprachdurchsage zugewiesenen zweiten Ortsattributen an das oder die Telekommunikationsendgerät(e) zu übermitteln, und dass die Softwareanwendung eingerichtet ist, um im Telekommunikationsendgerät auf Grund der zweiten Ortsattribute zweite Ortsdaten betreffend die örtliche Position des Telekommunikationsendgeräts zu ermitteln, die zweiten Ortsdaten im Telekommunikationsendgerät mit den zweiten Ortsattributen abzugleichen und bei Übereinstimmung der zweiten Ortsattribute mit den zweiten Ortsdaten entweder den Hinweis auf die Sprachdurchsage auf einem Display des Telekommunikationsendgeräts anzuzeigen, die Sprachdurchsage an das Telekommunikationsendgerät zu übermitteln und/oder die Sprachdurchsage wiederzugeben oder die Anzeige des Hinweises auf die Sprachdurchsage auf einem Display des Telekommunikationsendgeräts, die Übermittlung der Sprachdurchsage an das Telekommunikationsendgerät und/oder die Wiedergabe der Sprachdurchsage zu unterdrücken.

Gemäß einer bevorzugten Ausbildung ist vorgesehen, dass weiters elektronische Ortsmarker, wie z.B. Beacons, vorgesehen sind, um die zweiten Ortsdaten anhand der Ortsmarker zu ermitteln.

Gemäß einer bevorzugten Ausbildung ist vorgesehen, dass ein Notifizierungsdienst vorgesehen ist, wobei das Übermitteln und Anzeigen des Hinweises auf die Sprachdurchsage mittels des Notifizierungsdienstes erfolgt.

Gemäß einer bevorzugten Ausbildung ist vorgesehen, dass das Übermitteln des Hinweises auf die Sprachdurchsage mittels einer Push-Nachricht des Notifizierungsdienstes erfolgt.

Gemäß einer bevorzugten Ausbildung ist vorgesehen, dass weiters wenigstens ein Endgerät eines Bündelfunksystems für die Aufnahme der Sprachdurchsage vorgesehen ist, das die Sprachnachricht vorzugsweise mittels einer Push-To-Talk Funktion nach dem Rufaufbau zum Server-Rechner an den Server-Rechner überträgt.

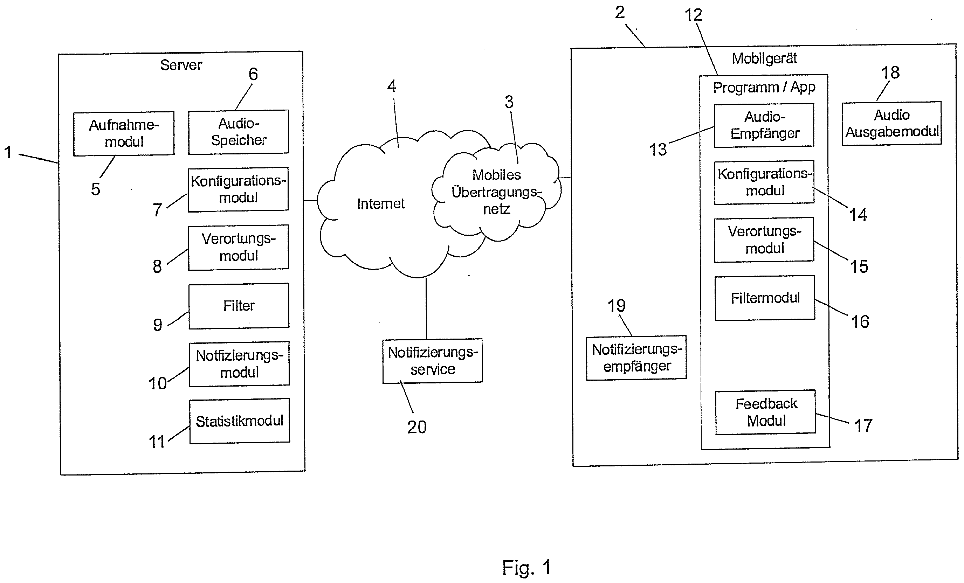

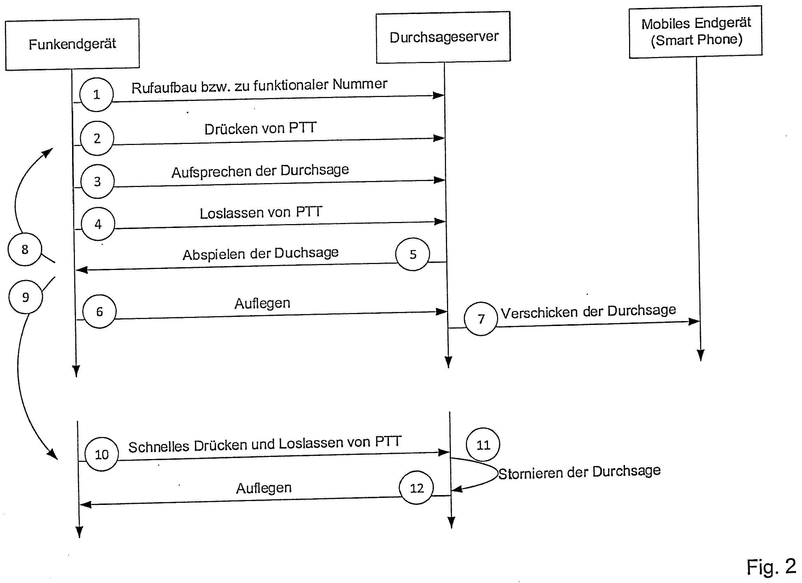

Die Erfindung wird nachfolgend anhand eines in der zeichnung schematisch dargestellten Ausführungsbeispiels näher erläutert. In dieser zeigen Fig. 1 den Aufbau des erfindungsgemäßen Durchsagesystems und Fig. 2 die Verwendung eines Funkendgeräts zum Aufnehmen einer Sprachdurchsage.

In Fig. 1 ist ein Server-Rechner mit 1 bezeichnet. Eines der beteiligten mobilen Telekommunikationsendgeräte ist mit 2 bezeichnet und ist über ein mobiles Datenübertragungsnetz 3, wie z.B. ein WLAN, GSM-, UTMS- oder LTE-Netz an das Internet 4 angeschlossen und steht auf diese Weise mit dem Server-Rechner 1 in Telekommunikationsverbindung.

Der Server-Rechner 1 verfügt über ein Audioaufnahmemodul 5, mit welchem Sprachdurchsagen aufgenommen werden. Das Audioaufnahmemodul 5 ist mit einem Audiospeicher 6 verbunden, in welchem die aufgenommenen Sprachdurchsagen gespeichert werden. Es ist weiters ein Konfigurationsmodul 7 vorgesehen, in dem Zuordnungen von Attributen zu den im Audiospeicher 6 abgelegten Sprachdurchsagen gespeichert sind. Die Zuordnungen können beispielsweise in einer relationalen Datenbank gespeichert sein. Die Attribute umfassen vorzugsweise Ortsattribute und geräte- und benutzerspezifische Attribute. Weiters umfasst der Server-Rechner ein Verortungsmodul 8, ein Filtermodul 9, ein Notifizierungsmodul 10 und eine Statistikmodul 11.

Das Endgerät 2 umfasst eine Softwareanwendung bzw. App 12, welche einen Audioempfänger 13, ein Konfigurationsmodul 14, ein Verortungsmodul 15, ein Filtermodul 16 und ein Feedbackmodul 17 aufweist. Das Endgerät verfügt weiters über ein Audioausgabemodul 18 und einen Notifizierungsempfänger 19, der mit einem Notifizierungsdienst 20 zusammenwirkt.

Die Interaktion zwischen dem Server-Rechner 1 und dem Endgerät 2 lässt sich in drei Abschnitte unterteilen.

### 1. Initialisierung

Im Initialisierungsabschnitt stimmen sich der Server-Rechner 1 und das Endgerät 2 aufeinander ab. Dabei werden vom Server-Rechner 1 wichtige Informationen für die Verortung an das Endgerät 2 übermittelt. Dies sind beispielsweise für die Verortung des Endgeräts 2 relevante Bluetooth LE Beacons oder Geo-Fences. Andererseits kann das Endgerät 2 relevante benutzerspezifische Daten oder manche Arten von Situationsdaten an den Server-Rechner 1 senden. Beispiele für benutzerspezifische Daten liegen im Bereich von Passagierinformationen, ob bestimmte Behinderungen des Benutzers zu berücksichtigen sind, oder im Bereich von Sicherheitsanwendungen, zu welcher Personengruppe der Nutzer gehört. Beispiele für Situationsdaten sind im Bereich Individualverkehr, ob der Benutzer gerade aktiv Auto fährt oder aktiv Rad fährt.

Dieser Datenaustausch geschieht auch nach dem Initialisierungsschritt bei Änderungen an den ausgetauschten Daten.

### 2. Grobe Positionsverfolgung

Danach werden vom Verortungsmodul 15 des Endgeräts 2 periodisch oder bei signifikanten Positionsveränderungen aktualisierte Verortungsinformationen zum Server-Rechner 1 übermittelt und dort gespeichert.

### 3. Durchsage

Die tatsächliche Übermittlung von Durchsagen erfolgt wie folgt: Das Aufnahmemodul 5 im Server-Rechner 1 dient zur Aufzeichnung von Durchsagen (zum Beispiel über Web-Applikationen oder spezielle Programme bzw. Apps mobiler Endgeräte) bzw. zu deren Entgegennahme von Vorsystemen. Darüber hinaus erfolgt eine Attributierung, die auch eine örtliche Zuordnung wie beispielsweise zu einem geographischen Bereich, zu einem Gebäudeteil oder zu konkreten Verkehrslinien oder Fahrzeugen, umfasst. Die Durchsagen werden im Audio-Speicher 6 des Server-Rechners 1 abgelegt.

Das Verortungsmodul 8 des Server-Rechners 1 wandelt die örtliche Attributierung in eine Form um, die durch die Endgeräte verarbeitbar ist, wie zum Beispiel geographische Bereiche (Geo-Fences) oder eine Menge von für die Verortung relevanten Bluetooth LE Beacons. Dabei können auch logische Operationen angewandt werden. Zum Beispiel könnten im Bereich der öffentlichen Sicherheit oder des Crowd Tasking bestimmte Ruheräume, die eigene Wohnung oder ein Stützpunkt mit einem Bluetooth LE Beacons oder mit Geo-Fencing markiert werden, um die Durchstellung bestimmter Durchsagen zu unterdrücken (z.B. um die Erholung von Einsatzkräften nicht zu stören) oder explizit zu aktivieren (z.B. zur dringenden Anforderung notwendiger Ressourcen). Aufgabe des serverseitigen Filtermoduls 9 ist es, nun anhand der groben Kenntnis des Aufenthaltsorts der Endgeräte aufgrund der groben Positionsverfolgung sowie auf Basis der bei der Initialisierung übertragenen Benutzer- und Situationsdaten eine Vorselektion der Endgeräte durchzuführen, welche von einer bestimmten Durchsage zu notifizieren sind. Dies ist insbesondere deshalb relevant, da zum Beispiel bei einem landesweiten Einsatz und Nutzung für kleinräumige Durchsagen (z.B. auf Bahnsteigen) die Anzahl der Durchsagen im Verhältnis zu den tatsächlich betroffenen Endgeräten sehr hoch ist, sodass es zu einer unnötig hohen zu übertragenden Datenmenge sowie einem hohen Batterieverbrauch der Endgeräte führen würde.

Danach ist es Aufgabe des Notifizierungsmoduls 10 die Notifizierung der Endgeräte 2 durchzuführen. Diese Notifizierung kann ein oder mehrere, auch externe Notifizierungsdienste 20 benötigen (z.B. für iOS- oder Android-Betriebssysteme). Die Notifizierung wird vom Notifizierungsempfänger 19 des Endgeräts 2 entgegengenommen und je nach Ausprägung erforderlichenfalls automatisch ein Start der Softwareanwendung 12 durchgeführt. Nach dem Empfang der Notifikation wird vom Verortungsmodul 15 die örtliche Position und/oder die Zuordnung zu einem bestimmten Gebäude- oder Geländebereichen oder zu sich möglicherweise auch bewegenden Objekten wie Fahrzeugen ermittelt. Dafür kann sich das Endgerät unterschiedlicher Lokalisierungstechnologien, insbesondere GPS, WLAN Access Points, GSM-Sendeeinheiten oder Bluetooth LE Beacons bedienen. Das Filtermodul 16 prüft, ob diese ermittelten Verortungsinformationen in den Gültigkeitsbereich der Durchsage fallen. Ist dies der Fall, wird vom Audio-Empfänger 13 das entsprechende Audio-File vom Server-seitigen Audiospeicher 6 abgerufen und über das Audio Ausgabemodul 18 ausgegeben.

Ein endgeräteseitiges Feedback-Modul 17 erlaubt es, Informationen über die Nutzbarkeit oder Qualität der Durchsagen an das serverseitige Statistikmodul 11 zu senden. Dies kann einerseits eine manuelle Bewertung durch den Benutzer des Endgeräts 2 sein, aber auch automatisch gewonnene Daten enthalten, wie beispielsweise, ob die Durchsagen aufgrund der Filterkriterien ausgeschlossen wurden, der Zeitraum bis zur Annahme einer Durchsage oder in welchem Zustand sich das Endgerät 2 bei Empfang der Durchsage befunden hat. Das serverseitige Statistikmodul 11 kann auf Basis dieser Feedbackdaten, der groben Positionsdaten der Endgeräts sowie der Daten des Audiospeichers 6 Auswertungen erstellen.

Zur Nutzung eines Funksystems (Analogfunk, Tetra, GSM-R, etc.) als Aufnahmemodul oder zur Anbindung des Durchsagesystems an (professionelle) Funksysteme (Analogfunk, Tetra, GSM-R, etc.) kann die dort übliche Push-To-Talk-Funktionalität (PTT) zum Absetzen und Überprüfung von Durchsagen genutzt werden. Dazu werden bei Half-Duplex-Gesprächen durch
- Drücken des Push-To-Talk-Knopfes
- Loslassen des Push-To-Talk-Knopfes
- Schnelles, uU mehrfaches Drücken und wieder loslassen
- Auflegen
Kommandos an einen Durchsage-Server zur Aufnahme, Kontrolle oder Löschung von Durchsagen abgesetzt.

Anhand der Darstellung gemäß Fig. 2 wird ein beispielhafter Ablauf eines solchen Aufnahmevorgangs erläutert. Zunächst wird vom Funkendgerät z.B. über eine für Fahrgastdurchsagen reservierte funktionale Nummer ein Gespräch zum Durchsageserver aufgebaut (Schritt 1). Nach Drücken des Push-To-Talk-Knopfes wird der Sprachkanal hergestellt (Schritt 2) und der Benutzer kann die Durchsage aufsprechen (Schritt 3). Die Aufnahme wird durch Loslassen des Push-To-Talk-Knopfes beendet (Schritt 4) und der Server spielt die Durchsage zur Überprüfung durch den Benutzer ab (Schritt 5). Gefällt dem Benutzer die Durchsage, beendet er den Anruf (Schritt 6) und die Durchsage wird vom Durchsageserver an die betroffenen Empfänger verschickt (Schritt 7). Ist der Benutzer mit der Durchsage unzufrieden (Schritt 8), kann er durch ein nochmaliges Drücken des Push-To-Talk-Knopfes (Schritt 2) das Aufsprechen der Durchsage wiederholen. Will der Benutzer doch keine Durchsage absetzen (Schritt 9) kann er hintereinander den Push-To-Talk-Knopf schnell drücken und wieder loslassen (Schritt 10). In diesem Fall storniert der Durchsageserver die Durchsage (Schritt 11) und beendet das Gespräch (Schritt 12).

In einer beispielhaften Ausgestaltung der Erfindung kann ein eigenes Ausgabemodul für Fahrzeug-Freisprecheinrichtungen eingesetzt werden. Für Fahrzeuge mit an das Mobilgerät angeschlossener Freisprecheinrichtung kann sowohl die Signalisierung als auch das Abspielen der Durchsage über diese erfolgen. Dazu wird eine am mobilen Endgerät (Smartphone) bereitstehende Durchsage der Freisprecheinrichtung wie ein Telefonanruf signalisiert, wobei zur Unterscheidung von Telefonanrufen ein spezieller Klingelton eingesetzt werden kann. Der Fahrer kann nun den Anruf akzeptieren, sodass die Durchsage über die Freisprecheinrichtung abgespielt wird. Bei Durchsagen während eines Telefonates kann diese Tatsache von der Programmlogik erkannt werden und die Durchsage nach Beendigung des Telefonats automatisch neu signalisiert werden. Eine solche Ausgestaltung der Erfindung ist besonders vorteilhaft für das Wiedergeben von Verkehrsnachrichten und stellt eine wesentliche Verbesserung zu der üblichen Verbreitung von Verkehrsnachrichten über das Radio dar, weil der Benutzer nur diejenigen Nachrichten erhält, die für seinen Aufenthaltsort relevant sind.

In einer weiteren beispielhaften Ausgestaltung der Erfindung kann eine automatische Veränderung von Situationsdaten bzw. Filterkriterien durch Markierung von Orten vorgesehen sein, wobei verschiedene Markierungsmethoden denkbar sind. Im Bereich von Verkehrsdurchsagen kann z.B. die Detektion einer angeschlossenen Freisprecheinrichtung oder ein im Fahrzeug positionierter Bluetooth LE Beacon dem Endgerät signalisieren, dass der Empfang von Verkehrsdurchsagen für den Individualverkehr erwünscht ist. Die Markierung eines Radfahrrucksacks mit einem Bluetooth LE Beacon könnte die Durchsagen für Radfahrer aktivieren.

## Patentansprüche

1. Verfahren zum Übermitteln und Wiedergeben von Sprachdurchsagen, umfassend
- das Aufnehmen einer Sprachdurchsage und Speichern derselben in einem Server-Rechner (1),
- das Zuweisen von Attributen, wie z.B. ersten und ggf. zweiten Ortsattributen und/oder benutzerspezifischen Attributen, zu der aufgenommenen Sprachdurchsage,
- das Erfassen von gerätespezifischen und/oder benutzerspezifischen Daten in mobilen Telekommunikationsendgeräten (2) von Nutzern,
- das Übermitteln der gerätespezifischen und/oder benutzerspezifischen Daten gemeinsam mit einer Geräteidentifikation des jeweiligen Telekommunikationsendgeräts (2) an den Server-Rechner (1),
- das Abgleichen der der Sprachdurchsage zugewiesenen Attribute mit den von den Telekommunikationsendgeräten (2) erhaltenen gerätespezifischen und/oder benutzerspezifischen Daten,
- das Selektieren wenigstens einer Geräteidentifikation anhand des Abgleichs der Attribute mit den erhaltenen gerätespezifischen und/oder benutzerspezifischen Daten,
- das Übermitteln der Sprachdurchsage und/oder eines Hinweises auf die Sprachdurchsage an das oder die der wenigstens einen selektierten Geräteidentifikation entsprechende(n) Telekommunikationsendgerät(e) (2).

2. Verfahren nach Anspruch 1, **dadurch gekennzeichnet, dass** der Hinweis, z.B. optisch (z.B. Anzeige auf einem Display des Telekommunikationsendgeräts (2)), akustisch oder taktil, signalisiert wird und die Sprachdurchsage nach einer Benutzeraktion am Telekommunikationsendgerät (2) wiedergegeben wird, wobei die an das Telekommunikationsendgerät (2) übermittelte Sprachdurchsage vorzugsweise automatisch wiedergegeben wird.

3. Verfahren nach Anspruch 1 oder 2, **dadurch gekennzeichnet, dass** die gerätespezifischen Daten erste Ortsdaten, insbesondere GPS-Daten, betreffend die örtliche Position des Telekommunikationsendgeräts (2) umfassen und dass die ersten Ortsdaten im Server-Rechner (1) mit den der Sprachdurchsage zugewiesenen ersten Ortsattributen abgeglichen werden.

4. Verfahren nach einem der Ansprüche 1 bis 3, **dadurch gekennzeichnet, dass** die Sprachdurchsage bzw. der Hinweis auf die Sprachdurchsage gemeinsam mit den der Sprachdurchsage zugewiesenen zweiten Ortsattributen an das oder die Telekommunikationsendgerät(e) (2)übermittelt wird und dass im Telekommunikationsendgerät (2) auf Grund der zweiten Ortsattribute zweite Ortsdaten betreffend die örtliche Position des Telekommunikationsendgeräts (2) ermittelt werden und im Telekommunikationsendgerät (2) mit den zweiten Ortsattributen abgeglichen werden und bei Übereinstimmung der zweiten Ortsattribute mit den zweiten Ortsdaten entweder der Hinweis auf die Sprachdurchsage auf einem Display des Telekommunikationsendgeräts (2) angezeigt, die Sprachdurchsage an das Telekommunikationsendgerät (2) übermittelt und/oder die Sprachdurchsage wiedergegeben wird oder die Anzeige des Hinweises auf die Sprachdurchsage auf einem Display des Telekommunikationsendgeräts (2), die Übermittlung der Sprachdurchsage an das Telekommunikationsendgerät (2) und/oder die Wiedergabe der Sprachdurchsage unterdrückt wird.

5. Verfahren nach Anspruch 4, **dadurch gekennzeichnet, dass** die zweiten Ortsdaten anhand von elektronischen Ortsmarkern, wie z.B. Beacons, ermittelt werden.

6. Verfahren nach einem der Ansprüche 1 bis 5, **dadurch gekennzeichnet, dass** das Übermitteln und Anzeigen des Hinweises auf die Sprachdurchsage mittels eines Notifizierungsdienstes erfolgt, wobei das Übermitteln des Hinweises auf die Sprachdurchsage bevorzugt mittels einer Push-Nachricht des Notifizierungsdienstes erfolgt.

7. Verfahren nach einem der Ansprüche 1 bis 6, **dadurch gekennzeichnet, dass** die Aufnahme der Sprachdurchsage mit einem Endgerät eines Bündelfunksystems erfolgt, das die Sprachnachricht vorzugsweise mittels einer Push-To-Talk Funktion nach dem Rufaufbau zum Server-Rechner (1) an den Server-Rechner (1) überträgt.

8. System zum Übermitteln und Wiedergeben von Sprachdurchsagen umfassend einen Server-Rechner (1) und eine Vielzahl von mobilen Telekommunikationsendgeräten (2), wobei der Server-Rechner (1) einen Speicher (6) mit darin gespeicherten Sprachdurchsagen und diesen zugewiesenen Attributen, wie z.B. ersten und ggf. zweiten Ortsattributen und/oder benutzerspezifischen Attributen, aufweist und die Telekommunikationsendgeräte (2) eine Softwareapplikation (12) aufweisen, die eingerichtet ist, um gerätespezifische und/oder benutzerspezifische Daten zu erfassen und wobei der Server-Rechner (1) und die Telekommunikationsendgeräte (2) mit Hilfe eines Telekommunikationsnetzwerkes in Telekommunikationsverbindung bringbar sind und die Softwareapplikation (12) eingerichtet ist, um die gerätespezifischen und/oder benutzerspezifischen Daten gemeinsam mit einer Geräteidentifikation des jeweiligen Telekommunikationsendgeräts (2) an den Server-Rechner (1) zu übermitteln, wobei der Server-Rechner (1) eine Serverapplikation aufweist, die eingerichtet ist, um die der Sprachdurchsage zugewiesenen Attribute mit den von den Telekommunikationsendgeräten (2) erhaltenen gerätespezifischen und/oder benutzerspezifischen Daten abzugleichen und wenigstens eine Geräteidentifikation anhand des Abgleichs der Attribute mit den erhaltenen gerätespezifischen und/oder benutzerspezifischen Daten zu selektieren und die Sprachdurchsage und/oder einen Hinweises auf die Sprachdurchsage an das oder die der wenigstens einen selektierten Geräteidentifikation entsprechende(n) Telekommunikationsendgerät(e) (2) zu übermitteln.

9. System nach Anspruch 8, **dadurch gekennzeichnet, dass** die Telekommunikationsendgeräte (2) von Smartphones gebildet sind.

10. System nach Anspruch 8 oder 9, **dadurch gekennzeichnet, dass** die Softwareapplikation (12) eingerichtet ist, um den Hinweis auf einem Display des Telekommunikationsendgeräts (2) anzuzeigen und die Sprachdurchsage nach einer Benutzereingabe am Telekommunikationsendgerät (2) akustisch wiederzugeben, wobei die Softwareapplikation (1) bevorzugt eingerichtet ist, um die an das Telekommunikationsendgerät (2) übermittelte Sprachdurchsage automatisch wiederzugeben.

11. System nach einem der Ansprüche 8 bis 10, **dadurch gekennzeichnet, dass** die gerätespezifischen Daten erste Ortsdaten, insbesondere GPS-Daten, betreffend die örtliche Position des Telekommunikationsendgeräts (2) umfassen und dass die ersten Ortsdaten im Server-Rechner (1) mit den der Sprachdurchsage zugewiesenen ersten Ortsattributen abgeglichen werden.

12. System nach einem der Ansprüche 8 bis 11, **dadurch gekennzeichnet, dass** die Serveranwendung eingerichtet ist, um die Sprachdurchsage bzw. den Hinweis auf die Sprachdurchsage gemeinsam mit den der Sprachdurchsage zugewiesenen zweiten Ortsattributen an das oder die Telekommunikationsendgerät(e) (2) zu übermitteln, und dass die Softwareanwendung eingerichtet ist, um im Telekommunikationsendgerät (2) auf Grund der zweiten Ortsattribute zweite Ortsdaten betreffend die örtliche Position des Telekommunikationsendgeräts (2) zu ermitteln, die zweiten Ortsdaten im Telekommunikationsendgerät (2) mit den zweiten Ortsattributen abzugleichen und bei Übereinstimmung der zweiten Ortsattribute mit den zweiten Ortsdaten entweder den Hinweis auf die Sprachdurchsage auf einem Display des Telekommunikationsendgeräts (2) anzuzeigen, die Sprachdurchsage an das Telekommunikationsendgerät (2) zu übermitteln und/oder die Sprachdurchsage wiederzugeben oder die Anzeige des Hinweises auf die Sprachdurchsage auf einem Display des Telekommunikationsendgeräts (2), die Übermittlung der Sprachdurchsage an das Telekommunikationsendgerät (2) und/oder die Wiedergabe der Sprachdurchsage zu unterdrücken.

13. System nach Anspruch 12, **dadurch gekennzeichnet, dass** weiters elektronische Ortsmarker, wie z.B. Beacons, vorgesehen sind, um die zweiten Ortsdaten anhand der Ortsmarker zu ermitteln.

14. System nach einem der Ansprüche 8 bis 13, **dadurch gekennzeichnet, dass** ein Notifizierungsdienst vorgesehen ist, wobei das Übermitteln und Anzeigen des Hinweises auf die Sprachdurchsage mittels des Notifizierungsdienstes erfolgt, wobei das Übermitteln des Hinweises auf die Sprachdurchsage vorzugsweise mittels einer Push-Nachricht des Notifizierungsdienstes erfolgt.

15. System nach einem der Ansprüche 8 bis 14, **dadurch gekennzeichnet, dass** weiters wenigstens ein Endgerät eines Bündelfunksystems für die Aufnahme der Sprachdurchsage vorgesehen ist, das die Sprachnachricht vorzugsweise mittels einer Push-To-Talk Funktion nach dem Rufaufbau zum Server-Rechner (1) an den Server-Rechner (1) überträgt, oder dass weiters ein Sprachdialogsystem für die Aufnahme von Sprachdurchsagen vorgesehen ist, zu welchem mittels einer Sprachverbindung, z.B. mit einem Telefon, eine Verbindung herstellbar ist und welches zum Aufnehmen einer Sprachdurchsage ausgebildet ist, die im Speicher abgelegt werden.
